# EUROPEAN PATENT APPLICATION

(11) **EP 3 280 045 A1**
(43) Date of publication of application: **07.02.2018**
(21) Application number: 16200941.9
(22) Date of filing: 28.11.2016
(51) Int. Cl.: H02S 40/34, H02J 1/00

(54) **SMART SWITCH SYSTEM AND CONTROLLING METHOD FOR SWITCH BOX**

(30) Priority: 02.08.2016 TW 105124375
(71) Applicant: Delta Electronics, Inc., Taoyuan County 32063 (TW)
(72) Inventor: KU, Chen-Wei, 32063 Taoyuan City (TW); LEE, Lei-Ming, 32063 Taoyuan City (TW); LIN, Xin-Hung, 32063 Taoyuan City (TW)
(74) Representative: 2K Patentanwälte Blasberg Kewitz & Reichel

(57) **Abstract**

A smart switch system (20) includes a smart switch box (10). The smart switch box (10) includes a switch box output side (102), an output-side voltage detection unit (104), a switch control unit (106), a switch unit (108) and a switch box input side (110). The output-side voltage detection unit (104) detects a voltage of the switch box output side (102) and informs the switch control unit (106) of the voltage of the switch box output side (102). According to the voltage of the switch box output side (102), the switch control unit (106) turns on or off the switch unit (108). When the switch control unit (106) turns on the switch unit (108), an input voltage (112) sent from a direct-current voltage generation apparatus (50) is sent to the switch box output side (102) through the switch box input side (110) and the switch unit (108).

## Description

### BACKGROUND OF THE INVENTION

### Field of the Invention

The present invention relates to a switch system and a controlling method, and especially relates toa smart switch system and a controlling method for a switch box.

### Description of the Related Art

In the related art solar power generation system, usually the related art photovoltaic panel is connected to the related art inverter through the related art switch box, and then the related art inverter is connected to the power grid. The related art switch box is called the direct-current (DC) box as well. Engineers can perform the layout in the DC box.

In the normal condition, the related art switch box is turned on, so that the related art photovoltaic panel sends a direct-current voltage to the related art inverter through the related art switch box. But, in the abnormal condition (for examples, the arc is generated, the direct-current voltage is abnormal or the voltage of the power grid is abnormal), or in the condition that requires to cut off power (for example, other machines need to be installed), the related art switch box has to be turned off, so that the related art photovoltaic panel cannot send the direct-current voltage to the related art inverter.

For the related art switch box, the user has to turn off the switch in the related art switch box by hands to stop the related art photovoltaic panel sending the direct-current voltage to the related art inverter. It is very inconvenient. Although some of the related art switch boxes can turn on or turn off automatically, signal lines (for examples, RS-485, RS-232 and CANbus and so on) have to be arranged between the related art switch box and the related art inverter to transmit communication signals, so that the related art switch box is aware of the condition of the voltage of the power grid through the related art inverter, or the related art switch box is aware of the condition of the related art inverter to determine whether the related art switch box should be turned on or turned off. It is very inconvenient and wastes wires.

### SUMMARY OF THE INVENTION

It is an object of the present invention to provide an enhanced smart switch system that is suited to reduce the above-mentioned problems, particularly having a more efficient configuration. It is a further object of the present invention to provide an enhanced controlling method for a switch box that helps to reduce the above-mentioned problems, particularly enabling a more efficient controlling.

These problems are solved by a smart switch system as claimed by claim 1 and by a controlling method as claimed by claim 15. Further advantageous embodiments are the subject-matter of the dependent claims.

In order to achieve the object of the present invention mentioned above, the smart switch system is electrically connected to a direct-current voltage generation apparatus. The smart switch system includes a smart switch box. The smart switch box includes a switch box output side, an output-side voltage detection unit, a switch control unit, a switch unit and a switch box input side. The output-side voltage detection unit is electrically connected to the switch box output side. The switch control unit is electrically connected to the output-side voltage detection unit. The switch unit is electrically connected to the switch box output side, the output-side voltage detection unit and the switch control unit. The switch box input side is electrically connected to the switch unit. The output-side voltage detection unit detects a voltage of the switch box output side and informs the switch control unit of the voltage of the switch box output side. According to the voltage of the switch box output side, the switch control unit turns on or off the switch unit. When the switch control unit turns on the switch unit, an input voltage sent from the direct-current voltage generation apparatus is sent to the switch box output side through the switch box input side and the switch unit.

Moreover, in an embodiment of the smart switch system mentioned above, the switch box further comprises an input voltage detection unit electrically connected to the switch control unit, the switch box input side and the switch unit. The input voltage detection unit detects the input voltage and informs the switch control unit of the input voltage.

Moreover, in an embodiment of the smart switch system mentioned above, the switch control unit comprises an AND gate subunit electrically connected to the switch unit and the input voltage detection unit.

Moreover, in an embodiment of the smart switch system mentioned above, the switch control unit further comprises an OR gate subunit electrically connected to the AND gate subunit and the output-side voltage detection unit.

Moreover, in an embodiment of the smart switch system mentioned above, the smart switch system is electrically connected to a power grid. The smart switch system further comprises an electronic apparatus electrically connected to the smart switch box and the power grid.

Moreover, in an embodiment of the smart switch system mentioned above, the electronic apparatus comprises a power grid voltage detection unit electrically connected to the power grid.

Moreover, in an embodiment of the smart switch system mentioned above, the electronic apparatus further comprises a converter control unit electrically connected to the power grid voltage detection unit.

Moreover, in an embodiment of the smart switch system mentioned above, the electronic apparatus further comprises a direct-current-to-direct-current conversion unit electrically connected to the converter control unit and the smart switch box.

Moreover, in an embodiment of the smart switch system mentioned above, the direct-current-to-direct-current conversion unit comprises a pulse width modulation signal controller electrically connected to the converter control unit.

Moreover, in an embodiment of the smart switch system mentioned above, the direct-current-to-direct-current conversion unit further comprises a transistor switch electrically connected to the pulse width modulation signal controller. When the power grid voltage detection unit detects no voltage of the power grid, the power grid voltage detection unit informs the converter control unit, so that the converter control unit controls the pulse width modulation signal controller to control the transistor switch to be turned on (namely, to keep turning on), so that the voltage of the switch box output side approaches zero, so that the switch control unit turns off the switch unit.

Moreover, in an embodiment of the smart switch system mentioned above, the electronic apparatus comprises an auxiliary power unit and a diode. The auxiliary power unit is electrically connected to the power grid. The diode is electrically connected to the auxiliary power unit and the smart switch box. The auxiliary power unit receives a voltage of the power grid to generate a direct-current auxiliary voltage and then outputs the direct-current auxiliary voltage through the diode, so that the direct-current auxiliary voltage is detected by the output-side voltage detection unit, so that if the input voltage detection unit detects the input voltage (namely, the input voltage exists), the switch control unit turns on the switch unit.

Moreover, in an embodiment of the smart switch system mentioned above, the electronic apparatus comprises an auxiliary power unit, a first controllable disconnecting subunit and a second controllable disconnecting subunit. The auxiliary power unit is electrically connected to the power grid. The first controllable disconnecting subunit is electrically connected to the auxiliary power unit and the smart switch box. The second controllable disconnecting subunit is electrically connected to the auxiliary power unit and the smart switch box. The auxiliary power unit receives a voltage of the power grid to output a direct-current auxiliary voltage, so that the direct-current auxiliary voltage is detected by the output-side voltage detection unit, so that if the input voltage detection unit detects the input voltage (namely, the input voltage exists), the switch control unit turns on the switch unit.

Moreover, in an embodiment of the smart switch system mentioned above, the electronic apparatus comprises an alternating-current-to-direct-current conversion unit electrically connected to the smart switch box and the power grid. The alternating-current-to-direct-current conversion unit receives a voltage of the power grid to generate a direct-current voltage, so that the direct-current voltage is detected by the output-side voltage detection unit, so that if the input voltage detection unit detects the input voltage (namely, the input voltage exists), the switch control unit turns on the switch unit.

Moreover, in an embodiment of the smart switch system mentioned above, when the switch control unit receives a standalone mode signal and the input voltage detection unit detects the input voltage (namely, the input voltage exists), the switch control unit turns on the switch unit.

In order to achieve the other object of the present invention mentioned above, the controlling method is applied to the switch box. The switch box includes a switch box output side, an output-side voltage detection unit, a switch control unit, a switch unit and a switch box input side. The controlling method comprises following steps: The output-side voltage detection unit detects a voltage of the switch box output side and informs the switch control unit of the voltage of the switch box output side. According to the voltage of the switch box output side, the switch control unit turns on or off the switch unit. When the switch control unit turns on the switch unit, an input voltage sent from a direct-current voltage generation apparatus is sent to the switch box output side through the switch box input side and the switch unit.

Moreover, in an embodiment of the controlling method mentioned above, the switch box further comprises an input voltage detection unit. The input voltage detection unit detects the input voltage and informs the switch control unit of the input voltage.

Moreover, in an embodiment of the controlling method mentioned above, when the input voltage detection unit tries to detect the input voltage but the input voltage does not exist, the switch control unit turns off the switch unit.

Moreover, in an embodiment of the controlling method mentioned above, the controlling method is applied to an electronic apparatus and a power grid. When the electronic apparatus detects a voltage of the power grid (namely, the voltage of the power grid exists), the electronic apparatus generates a voltage, so that the voltage generated by the electronic apparatus is detected by the output-side voltage detection unit.

Moreover, in an embodiment of the controlling method mentioned above, when the output-side voltage detection unit detects the voltage generated by the electronic apparatus (namely, the voltage generated by the electronic apparatus exists) and the input voltage detection unit detects the input voltage (namely, the input voltage exists), the switch control unit turns on the switch unit.

Moreover, in an embodiment of the controlling method mentioned above, when the switch control unit receives a standalone mode signal and the input voltage detection unit detects the input voltage (namely, the input voltage exists), the switch control unit turns on the switch unit.

The advantage of the present invention is that no signal wire is required between the switch box and the electronic apparatus.

### BRIEF DESCRIPTION OF DRAWING

Fig. 1 shows a block diagram of an embodiment of the smart switch system of the present invention.
Fig. 2 shows a partial block diagram of an embodiment of the smart switch box of the present invention.
Fig. 3 shows a partial block diagram of an embodiment of the internal logic determination circuit of the switch control unit of the present invention.
Fig. 4 shows a partial block diagram of the first embodiment of the electronic apparatus of the present invention.
Fig. 5 shows a partial block diagram of the second embodiment of the electronic apparatus of the present invention.
Fig. 6 shows a partial block diagram of the third embodiment of the electronic apparatus of the present invention.
Fig. 7 shows a partial block diagram of the fourth embodiment of the electronic apparatus of the present invention.
Fig. 8 shows a block diagram of another embodiment of the smart switch system of the present invention.
Fig. 9 shows a block diagram of still another embodiment of the smart switch system of the present invention.
Fig. 10 shows a block diagram of still another embodiment of the smart switch system of the present invention.
Fig. 11 shows a block diagram of still another embodiment of the smart switch system of the present invention.
Fig. 12 shows a flow chart of the controlling method for a switch box of the present invention.

### DETAILED DESCRIPTION OF THE INVENTION

Please refer to following detailed description and figures for the technical content of the present invention. The following detailed description and figures are referred for the present invention, but the present invention is not limited to it.

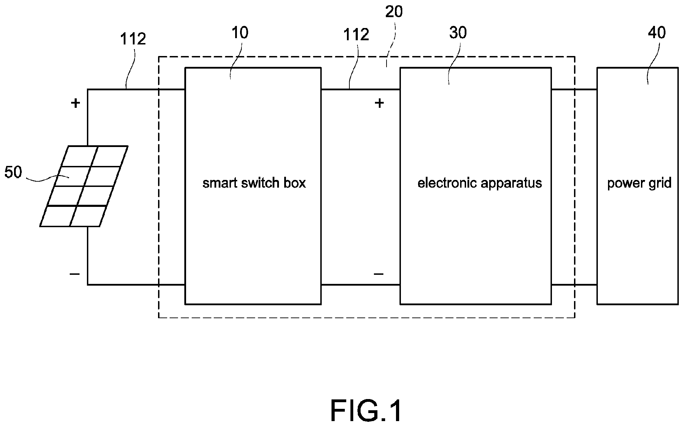

Fig. 1 shows a block diagram of an embodiment of the smart switch system of the present invention. A smart switch system 20 is electrically connected to a direct-current voltage generation apparatus 50 and a power grid 40. The smart switch system 20 includes a smart switch box 10 and an electronic apparatus 30. The electronic apparatus 30 is electrically connected to the smart switch box 10 and the power grid 40. The direct-current voltage generation apparatus 50 is electrically connected to the smart switch box 10.

The direct-current voltage generation apparatus 50 is, for example but not limited to, a photovoltaic panel. The electronic apparatus 30 is, for example but not limited to, a solar inverter. The power grid 40 is, for example but not limited to, one-phase, three-phase, isolated or non-isolated. Besides being applied to the solar power generation system, the present invention can be applied to the wind power generation system as well.

In the normal condition, the switch box 10 is turned on, so that the direct-current voltage generation apparatus 50 sends an input voltage 112 (for example, a direct-current voltage) to the electronic apparatus 30 through the switch box 10. But in the abnormal condition (for examples, the arc is generated, the input voltage 112 is abnormal or a voltage of the power grid 40 is abnormal), the switch box 10 has to be turned off, so that the direct-current voltage generation apparatus 50 cannot send the input voltage 112 to the electronic apparatus 30. The voltage of the power grid 40 is an alternating-current voltage.

For the related art switch box, the user has to turn off the switch in the related art switch box by hands to stop the direct-current voltage generation apparatus 50 sending the input voltage 112 to the electronic apparatus 30. Some of the related art switch boxes can turn on or turn off automatically, but signal lines (for examples, RS-485, RS-232 and CANbus and so on) have to be arranged between the related art switch box and the electronic apparatus 30 to transmit communication signals. One of the technical features of the present invention is to change a voltage of a power line between the smart switch box 10 and the electronic apparatus 30 to control a switch in the smart switch box 10, so that no signal wire is required. The content will be described in details as following:

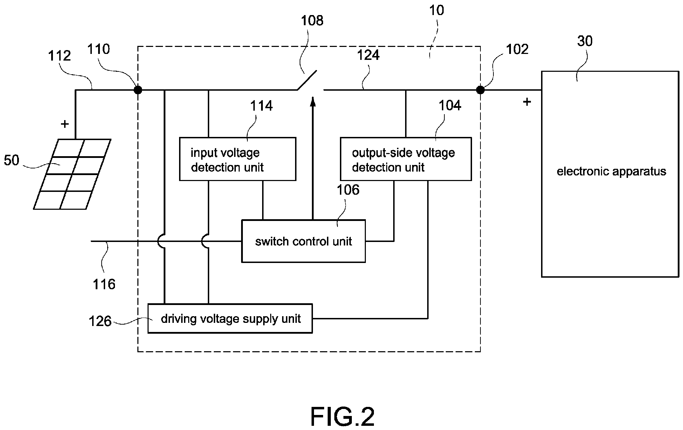

Fig. 2 shows a partial block diagram of an embodiment of the smart switch box of the present invention. The smart switch box 10 includes a switch box output side 102, an output-side voltage detection unit 104, a switch control unit 106, a switch unit 108, a switch box input side 110, an input voltage detection unit 114, a power line 124 and a driving voltage supply unit 126. The switch control unit 106 is, for example but not limited to, a microprocessor. The output-side voltage detection unit 104 and the input voltage detection unit 114 are, for example but not limited to, voltage-dividing resistor circuits or any voltage detection circuits which are known in the field.

The switch box output side 102 is electrically connected to the electronic apparatus 30. The output-side voltage detection unit 104 is electrically connected to the switch box output side 102. The switch control unit 106 is electrically connected to the output-side voltage detection unit 104. The switch unit 108 is electrically connected to the switch box output side 102, the output-side voltage detection unit 104 and the switch control unit 106. The switch box input side 110 is electrically connected to the switch unit 108. The input voltage detection unit 114 is electrically connected to the switch control unit 106, the switch box input side 110 and the switch unit 108. The power line 124 is electrically connected to the switch box output side 102, the output-side voltage detection unit 104, the switch unit 108 and the electronic apparatus 30. The driving voltage supply unit 126 is electrically connected to the output-side voltage detection unit 104, the switch control unit 106, the switch unit 108, the switch box input side 110, the input voltage detection unit 114 and the direct-current voltage generation apparatus 50. The driving voltage supply unit 126 utilizes the input voltage 112 to supply power to all of the internal components of the smart switch box 10, such as the output-side voltage detection unit 104, the switch control unit 106 and the input voltage detection unit 114.

The output-side voltage detection unit 104 detects a voltage of the switch box output side 102 and informs the switch control unit 106 of the voltage of the switch box output side 102. According to the voltage of the switch box output side 102 (and according to the status of the input voltage 112, and other statuses, which will be described in details later), the switch control unit 106 turns on or off the switch unit 108 (will be described in details later). When the switch control unit 106 turns on the switch unit 108, the input voltage 112 sent from the direct-current voltage generation apparatus 50 is sent to the switch box output side 102 through the switch box input side 110, the switch unit 108 and the power line 124, and then is sent to the electronic apparatus 30. The input voltage detection unit 114 detects the input voltage 112 and informs the switch control unit 106 of the input voltage 112.

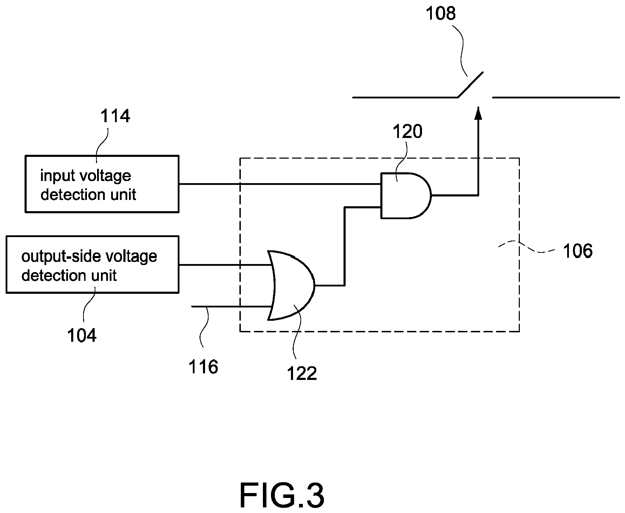

Fig. 3 shows a partial block diagram of an embodiment of the internal logic determination circuit of the switch control unit of the present invention. The switch control unit 106 comprises an AND gate subunit 120 and an OR gate subunit 122. The AND gate subunit 120 is electrically connected to the switch unit 108 and the input voltage detection unit 114. The OR gate subunit 122 is electrically connected to the AND gate subunit 120 and the output-side voltage detection unit 104. When the electronic apparatus 30 detects the voltage of the power grid 40 (namely, the voltage of the power grid 40 exists), the electronic apparatus 30 generates a voltage (will be described in details later), so that the output-side voltage detection unit 104 detects the voltage generated by the electronic apparatus 30. People having ordinary skills in the field should be able to understand that the logic determination circuit can be achieved by any other circuits, such as the microcontroller unit (MCU), the complex programmable logic device (CPLD), the field-programmable gate array (FPGA) and so on.

According to Fig. 3, when the input voltage detection unit 114 tries to detect the input voltage 112 but the input voltage 112 does not exist, the switch control unit 106 turns off the switch unit 108 (because of the AND gate subunit 120). When the output-side voltage detection unit 104 detects the voltage generated by the electronic apparatus 30 (namely, the voltage generated by the electronic apparatus 30 exists) and the input voltage detection unit 114 detects the input voltage 112 (namely, the input voltage 112 exists), the switch control unit 106 turns on the switch unit 108. When the OR gate subunit 122 of the switch control unit 106 receives a standalone mode signal 116 (indicating that the system is in the standalone mode) and the input voltage detection unit 114 detects the input voltage 112 (namely, the input voltage 112 exists), the switch control unit 106 turns on the switch unit 108.

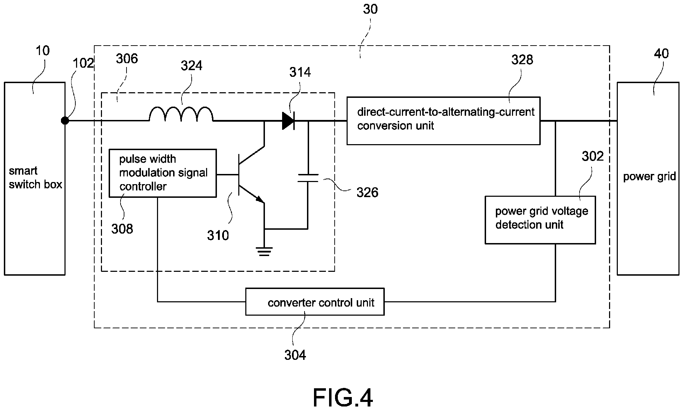

Fig. 4 shows a partial block diagram of the first embodiment of the electronic apparatus of the present invention. The electronic apparatus 30 comprises a power grid voltage detection unit 302, a converter control unit 304, a direct-current-to-direct-current conversion unit 306 and a direct-current-to-alternating-current conversion unit 328. The direct-current-to-direct-current conversion unit 306 comprises a pulse width modulation signal controller 308, a transistor switch 310, an inductor 324, a first diode 314 and a capacitor 326. The direct-current-to-direct-current conversion unit 306 is, for example but not limited to, a boost converter.

The power grid voltage detection unit 302 is electrically connected to the power grid 40. The converter control unit 304 is electrically connected to the power grid voltage detection unit 302. The direct-current-to-direct-current conversion unit 306 is electrically connected to the converter control unit 304 and the smart switch box 10. The direct-current-to-alternating-current conversion unit 328 is electrically connected to the direct-current-to-direct-current conversion unit 306, the power grid voltage detection unit 302 and the power grid 40. The pulse width modulation signal controller 308 is electrically connected to the converter control unit 304. The transistor switch 310 is electrically connected to the pulse width modulation signal controller 308. The inductor 324 is electrically connected to the transistor switch 310 and the smart switch box 10. The first diode 314 is electrically connected to the transistor switch 310 and the inductor 324. The capacitor 326 is electrically connected to the first diode 314.

When the power grid voltage detection unit 302 detects no voltage of the power grid 40 (namely, the voltage of the power grid 40 does not exist), the power grid voltage detection unit 302 informs the converter control unit 304, so that the converter control unit 304 controls the pulse width modulation signal controller 308 to control the transistor switch 310 to be turned on (namely, to keep turning on), so that the voltage of the switch box output side 102 approaches zero (namely, the voltage of the switch box output side 102 is less than a predetermined voltage, wherein the predetermined voltage is equal to 0.1 voltage or 0.01 voltage but the present invention is not limited to it), so that the switch control unit 106 turns off the switch unit 108.

If the direct-current voltage generation apparatus 50 is a solar panel, the voltage of the switch box output side 102 can approach zero by increasing a duty cycle of the transistor switch 310, so that the switch control unit 106 turns off the switch unit 108. This is the character of the voltage versus the current of the solar panel. The slope of the current is very even. Increasing the current will cause that the output voltage of the solar panel approaches zero.

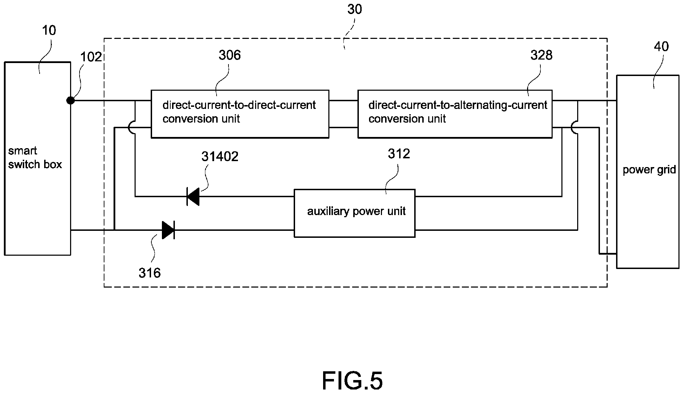

Fig. 5 shows a partial block diagram of the second embodiment of the electronic apparatus of the present invention. The electronic apparatus 30 comprises an auxiliary power unit 312, a third diode 31402, a second diode 316, a direct-current-to-direct-current conversion unit 306 and a direct-current-to-alternating-current conversion unit 328.

The auxiliary power unit 312 is electrically connected to the power grid 40. The third diode 31402 is electrically connected to the auxiliary power unit 312 and the smart switch box 10. The second diode 316 is electrically connected to the auxiliary power unit 312 and the smart switch box 10. The direct-current-to-direct-current conversion unit 306 is electrically connected to the third diode 31402, the second diode 316 and the smart switch box 10. The direct-current-to-alternating-current conversion unit 328 is electrically connected to the direct-current-to-direct-current conversion unit 306, the auxiliary power unit 312 and the power grid 40. The auxiliary power unit 312 can be one of the power supply circuits for the internal components of the electronic apparatus 30. The auxiliary power unit 312 is, for example but not limited to, a bridge rectifier circuit or a flyback converter.

The auxiliary power unit 312 receives the voltage of the power grid 40 to generate a direct-current auxiliary voltage to supply to some internal components (for examples, the direct-current-to-direct-current conversion unit 306 and the direct-current-to-alternating-current conversion unit 328) of the electronic apparatus 30, and outputs the direct-current auxiliary voltage through the diode 31402 and the second diode 316, so that the direct-current auxiliary voltage is detected by the output-side voltage detection unit 104, so that if the input voltage detection unit 114 detects the input voltage 112 (namely, input voltage 112 exists), the switch control unit 106 turns on the switch unit 108.

Because the bias electrical characteristic of the diode, when the switch unit 108 is turned on, the input voltage 112 sent by the direct-current voltage generation apparatus 50 will not influence the direct-current auxiliary voltage of the auxiliary power unit 312, so that the auxiliary power unit 312 can keep supplying the direct-current auxiliary voltage to the internal components of the electronic apparatus 30. People having ordinary skills in the field should be able to understand that isolating the input voltage 112 and the direct-current auxiliary voltage can be achieved by using only one diode as well.

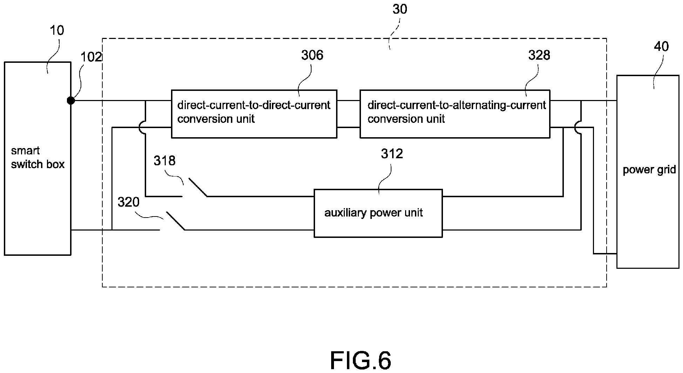

Fig. 6 shows a partial block diagram of the third embodiment of the electronic apparatus of the present invention. The electronic apparatus 30 comprises an auxiliary power unit 312, a first controllable disconnecting subunit 318, a second controllable disconnecting subunit 320, a direct-current-to-direct-current conversion unit 306 and a direct-current-to-alternating-current conversion unit 328.

The auxiliary power unit 312 is electrically connected to the power grid 40. The first controllable disconnecting subunit 318 is electrically connected to the auxiliary power unit 312 and the smart switch box 10. The second controllable disconnecting subunit 320 is electrically connected to the auxiliary power unit 312 and the smart switch box 10. The direct-current-to-direct-current conversion unit 306 is electrically connected to the first controllable disconnecting subunit 318, the second controllable disconnecting subunit 320 and the smart switch box 10. The direct-current-to-alternating-current conversion unit 328 is electrically connected to the direct-current-to-direct-current conversion unit 306, the auxiliary power unit 312 and the power grid 40. The first controllable disconnecting subunit 318 is, for example but not limited to, an insulated gate bipolar transistor (IGBT) or a relay. The second controllable disconnecting subunit 320 is, for example but not limited to, an insulated gate bipolar transistor (IGBT) or a relay. The auxiliary power unit 312 can be one of the power supply circuits for the internal components of the electronic apparatus 30. The auxiliary power unit 312 is, for example but not limited to, a bridge rectifier circuit or a flyback converter.

The auxiliary power unit 312 receives the voltage of the power grid 40 to turn on the first controllable disconnecting subunit 318 and the second controllable disconnecting subunit 320 to output a direct-current auxiliary voltage, so that the direct-current auxiliary voltage is detected by the output-side voltage detection unit 104, so that the smart switch box 10 is aware of the existence of the voltage of the power grid 40, so that if the input voltage detection unit 114 detects the input voltage 112 (namely, the input voltage 112 exists), the switch control unit 106 turns on the switch unit 108. In this embodiment, before the switch control unit 106 turns on the switch unit 108, the first controllable disconnecting subunit 318 and the second controllable disconnecting subunit 320 are turned off to avoid influencing the output voltage of the auxiliary power unit 312. This is because the auxiliary power unit 312 supplies power to the internal components as well.

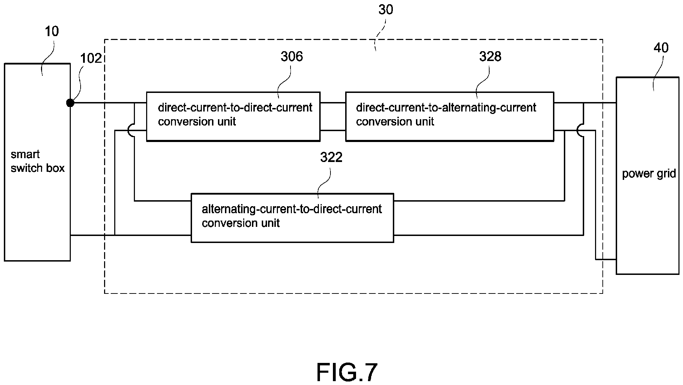

Fig. 7 shows a partial block diagram of the fourth embodiment of the electronic apparatus of the present invention. The electronic apparatus 30 comprises an alternating-current-to-direct-current conversion unit 322, a direct-current-to-direct-current conversion unit 306 and a direct-current-to-alternating-current conversion unit 328.

The alternating-current-to-direct-current conversion unit 322 is electrically connected to the smart switch box 10 and the power grid 40. The direct-current-to-direct-current conversion unit 306 is electrically connected to the smart switch box 10 and the alternating-current-to-direct-current conversion unit 322. The direct-current-to-alternating-current conversion unit 328 is electrically connected to the direct-current-to-direct-current conversion unit 306, the alternating-current-to-direct-current conversion unit 322 and the power grid 40. In this embodiment, the alternating-current-to-direct-current conversion unit 322 is an independent power converter which converts the alternating-current voltage of the power grid 40 into a direct-current voltage.

The alternating-current-to-direct-current conversion unit 322 receives the voltage of the power grid 40 to generate a direct-current voltage, so that the direct-current voltage is detected by the output-side voltage detection unit 104. At this time, the direct-current voltage is on the power line 124, so that the smart switch box 10 is aware of the existence of the voltage of the power grid 40, so that if the input voltage detection unit 114 detects the input voltage 112 (namely, the input voltage 112 exists), the switch control unit 106 turns on the switch unit 108.

In conclusion, if the standalone mode is not considered (discussed) first, the present invention can be divided into two parts:
The first part is that when the switch unit 108 is turned off: The output-side voltage detection unit 104 detects the voltage of the switch box output side 102. At this time, because the switch unit 108 is turned off, the voltage of the switch box output side 102 is generated by Figs. 5, 6 and 7. Each of the Figs. 5, 6 and 7 is to generate a voltage to inform the smart switch box 10 that the voltage of the power grid 40 is normal.

The second part is that when the switch unit 108 is turned on: Subsequently if the power grid 40 is abnormal, the switch unit 108 has to be turned off. At this time, the switch box output side 102 has the input voltage 112, so that the transistor switch 310 keeps turning on to cause that the switch box output side 102 is short-circuited. The output-side voltage detection unit 104 can detect and inform the switch control unit 106 to turn off the switch unit 108.

Moreover, for Fig. 5, if the third diode 31402 and the second diode 316 are removed from the electronic apparatus 30, the remaining components of the electronic apparatus 30 form an inverter. In another word, in an embodiment, the smart switch box 10 and the electronic apparatus 30 do not require extra communication circuits. The smart switch box 10 can indirectly detect the voltage of the power grid 40 by the auxiliary power unit 312, the third diode 31402 and the second diode 316.

For Fig. 6, if the first controllable disconnecting subunit 318 and the second controllable disconnecting subunit 320 are removed from the electronic apparatus 30, the remaining components of the electronic apparatus 30 form an inverter. In another word, the smart switch box 10 and the electronic apparatus 30 do not require extra communication circuits. The smart switch box 10 can indirectly detect the voltage of the power grid 40 by the auxiliary power unit 312, the first controllable disconnecting subunit 318 and the second controllable disconnecting subunit 320.

For Fig. 7, if the alternating-current-to-direct-current conversion unit 322 is removed from the electronic apparatus 30, the remaining components of the electronic apparatus 30 form an inverter. In another word, the smart switch box 10 and the electronic apparatus 30 do not require extra communication circuits. The smart switch box 10 can indirectly detect the voltage of the power grid 40 by the alternating-current-to-direct-current conversion unit 322.

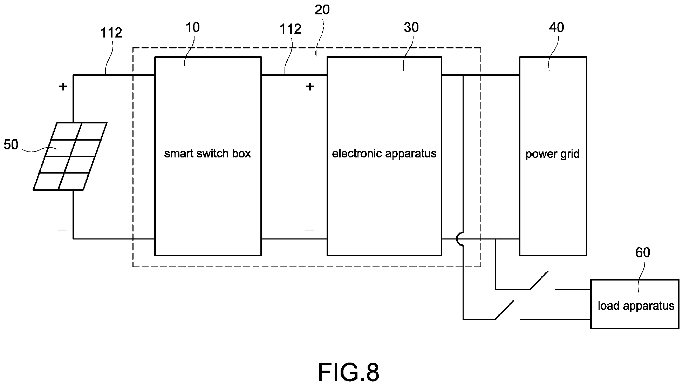

Fig. 8 shows a block diagram of another embodiment of the smart switch system of the present invention. The description for the elements shown in Fig. 8, which are similar to those shown in Figs. 1∼7, is not repeated here for brevity. Moreover, when the system is in the standalone mode (namely, receiving the standalone mode signal 116 mentioned above), even if there is no alternating-current voltage from the power grid 40, if there is the direct-current voltage generated by the direct-current voltage generation apparatus 50, a load apparatus 60 should be supplied power normally.

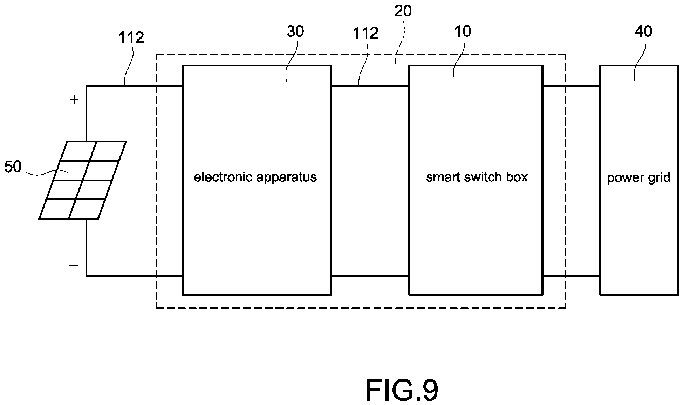

Fig. 9 shows a block diagram of still another embodiment of the smart switch system of the present invention. The description for the elements shown in Fig. 9, which are similar to those shown in Figs. 1∼8, is not repeated here for brevity. Moreover, the positions of the smart switch box 10 and the electronic apparatus 30 canbe exchanged. Namely, the smart switch box 10 can be applied to the alternating-current side for smart controlling, which is similar with the content mentioned above and is not repeated here for brevity. The present invention can be applied to both the direct-current side and the alternating-current side, which is similar with the content mentioned above and is not repeated here for brevity.

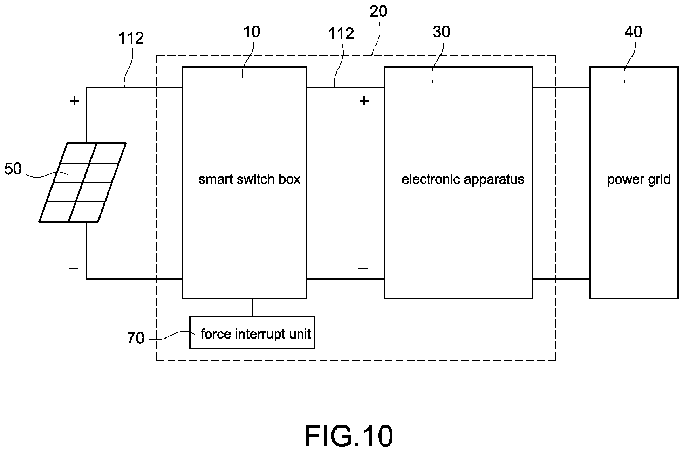

Fig. 10 shows a block diagram of still another embodiment of the smart switch system of the present invention. The description for the elements shown in Fig. 10, which are similar to those shown in Figs. 1∼9, is not repeated here for brevity. Moreover, the smart switch system 20 further comprises a force interrupt unit 70 electrically connected to the smart switch box 10. The force interrupt unit 70 is, for example but not limited to, a button used to turn off the smart switch box 10 forcedly, so that the direct-current voltage generation apparatus 50 cannot send the input voltage 112 to the electronic apparatus 30.

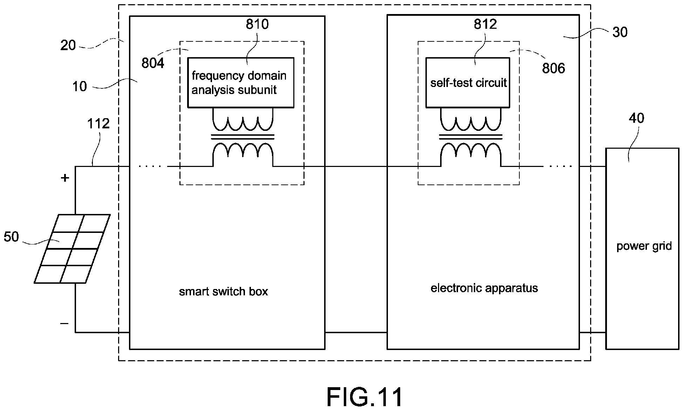

Fig. 11 shows a block diagram of still another embodiment of the smart switch system of the present invention. The description for the elements shown in Fig. 11, which are similar to those shown in Figs. 1∼10, is not repeated here for brevity. Moreover, the smart switch box 10 further comprises a high frequency signal receiving unit 804. The electronic apparatus 30 further comprises a high frequency signal generating unit 806. The high frequency signal receiving unit 804 comprises a frequency domain analysis subunit 810. The high frequency signal generating unit 806 comprises a self-test circuit 812.

The high frequency signal receiving unit 804 is electrically connected to the output-side voltage detection unit 104 and the switch unit 108 shown in Fig. 2. The high frequency signal generating unit 806 is electrically connected to the high frequency signal receiving unit 804. The self-test circuit 812 is, for example but not limited to, an arc detection circuit. When an arc happens, a high frequency signal can be transmitted to turn off the switch unit 108.

The electronic apparatus 30 determines whether the voltage of the power grid 40 exists or not. If the voltage of the power grid 40 exists, the electronic apparatus 30 utilizes the high frequency signal generating unit 806 to generate and transmit the high frequency signal to the high frequency signal receiving unit 804. After the high frequency signal receiving unit 804 receives the high frequency signal, the high frequency signal receiving unit 804 sends a command to the logic determination circuit (shown in Fig. 3) of the smart switch box 10. Namely, as shown in Fig. 2, the output-side voltage detection unit 104 detects the voltage of the switch box output side 102 to inform the switch control unit 106.

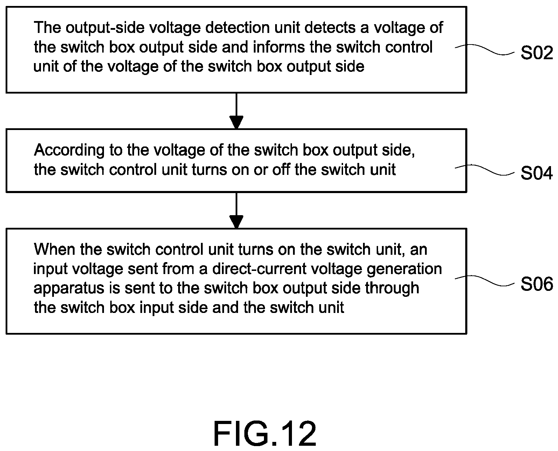

Fig. 12 shows a flow chart of the controlling method for a switch box of the present invention. A controlling method is applied to a switch box, an electronic apparatus and a power grid. The switch box includes a switch box output side, an output-side voltage detection unit, a switch control unit, a switch unit, a switch box input side and an input voltage detection unit. The controlling method comprises following steps:
S02: The output-side voltage detection unit detects a voltage of the switch box output side and informs the switch control unit of the voltage of the switch box output side.
S04: According to the voltage of the switch box output side, the switch control unit turns on or off the switch unit.
S06: When the switch control unit turns on the switch unit, an input voltage sent from a direct-current voltage generation apparatus is sent to the switch box output side through the switch box input side and the switch unit.

The input voltage detection unit detects the input voltage and informs the switch control unit of the input voltage. When the input voltage detection unit detects that there is no the input voltage (namely, the input voltage does not exist), the switch control unit turns off the switch unit. When the electronic apparatus detects a voltage of the power grid (namely, the voltage of the power grid exists), the electronic apparatus generates a voltage, so that the voltage generated by the electronic apparatus is detected by the output-side voltage detection unit. When the output-side voltage detection unit detects the voltage generated by the electronic apparatus (namely, the voltage generated by the electronic apparatus exists) and the input voltage detection unit detects the input voltage (namely, the input voltage exists), the switch control unit turns on the switch unit. When the switch control unit receives a standalone mode signal and the input voltage detection unit detects the input voltage (namely, the input voltage exists), the switch control unit turns on the switch unit.

The advantage of the present invention is that no signal wire is required between the switch box and the electronic apparatus.

## Claims

1. A smart switch system (20) electrically connected to a direct-current voltage generation apparatus (50), the smart switch system (20) comprising:
a smart switch box (10),
wherein the smart switch box (10) comprises:
a switch box output side (102);
an output-side voltage detection unit (104) electrically connected to the switch box output side (102);
a switch control unit (106) electrically connected to the output-side voltage detection unit (104);
a switch unit (108) electrically connected to the switch box output side (102), the output-side voltage detection unit (104) and the switch control unit (106); and
a switch box input side (110) electrically connected to the switch unit (108),
wherein the output-side voltage detection unit (104) detects a voltage of the switch box output side (102) and informs the switch control unit (106) of the voltage of the switch box output side (102); according to the voltage of the switch box output side (102), the switch control unit (106) turns on or off the switch unit (108); when the switch control unit (106) turns on the switch unit (108), an input voltage (112) sent from the direct-current voltage generation apparatus (50) is sent to the switch box output side (102) through the switch box input side (110) and the switch unit (108).

2. The smart switch system (20) in claim 1, wherein the switch box (10) further comprises an input voltage detection unit (114) electrically connected to the switch control unit (106), the switch box input side (110) and the switch unit (108),
wherein the input voltage detection unit (114) detects the input voltage (112) and informs the switch control unit (106) of the input voltage(112).

3. The smart switch system (20) in claim 2, wherein the switch control unit (106) comprises
an and gate subunit (120) electrically connected to the switch unit (108) and the input voltage detection unit (114), and/or
an or gate subunit (122) electrically connected to the and gate subunit (120) and the output-side voltage detection unit (104).

4. The smart switch system (20) in claim 3, wherein the smart switch system (20) is electrically connected to a power grid (40),wherein the smart switch system (20) further comprises an electronic apparatus (30) electrically connected to the smart switch box (10) and the power grid (40), wherein the electronic apparatus (30) preferably comprises a power grid voltage detection unit (302) electrically connected to the power grid (40).

5. The smart switch system (20) in claim 4, wherein the electronic apparatus (30) further comprises
a converter control unit (304) electrically connected to the power grid voltage detection unit (302), and/or
a direct-current-to-direct-current conversion unit (306) electrically connected to the converter control unit (304) and the smart switch box (10); wherein
thedirect-current-to-direct-current conversion unit (306) preferably comprises a pulse width modulation signal controller (308) electrically connected to the converter control unit (304).

6. The smart switch system (20) in claim 5, wherein the direct-current-to-direct-current conversion unit (306) further comprises a transistor switch (310) electrically connected to the pulse width modulation signal controller (308),
wherein when the power grid voltage detection unit (302) detects no voltage of the power grid (40), the power grid voltage detection unit (302) informs the converter control unit (304), so that the converter control unit (304) controls the pulse width modulation signal controller (308) to control the transistor switch (310) to be turned on, so that the voltage of the switch box output side (102) approaches zero, so that the switch control unit (106) turns off the switch unit (108).

7. The smart switch system (20) in claim 4, wherein the electronic apparatus (30) comprises:
an auxiliary power unit (312)electrically connected to the power grid(40); and
adiode(316) electrically connected to the auxiliary power unit (312) and the smart switch box (10),
wherein the auxiliary power unit (312) receives a voltage of the power grid (40) to generate a direct-current auxiliary voltage and then outputs the direct-current auxiliary voltage through the diode (316), so that the direct-current auxiliary voltage is detected by the output-side voltage detection unit(104), so that if the input voltage detection unit (114) detects the input voltage(112), the switch control unit (106) turns on the switch unit (108).

8. The smart switch system (20) in claim 4, wherein the electronic apparatus (30) comprises:
an auxiliary power unit (312)electrically connected to the power grid (40);
a first controllable disconnecting subunit (318)electrically connected to the auxiliary power unit (312) and the smart switch box (10); and
a second controllable disconnecting subunit (320)electrically connected to the auxiliary power unit (312) and the smart switch box (10),
wherein the auxiliary power unit (312) receives a voltage of the power grid (40) to turn on the first controllable disconnecting subunit (318) and the second controllable disconnecting subunit (320) to output a direct-current auxiliary voltage, so that the direct-current auxiliary voltage is detected by the output-side voltage detection unit (104), so that if the input voltage detection unit (114) detects the input voltage (112), the switch control unit (106) turns on the switch unit (108).

9. The smart switch system (20) in claim 4, wherein the electronic apparatus (30) comprises an alternating-current-to-direct-current conversion unit (322) electrically connected to the smart switch box (10) and the power grid (40),
wherein the alternating-current-to-direct-current conversion unit (322) receives a voltage of the power grid (40) to generate a direct-current voltage, so that the direct-current voltage is detected by the output-side voltage detection unit (104), so that if the input voltage detection unit (114) detects the input voltage (112), the switch control unit (106) turns on the switch unit (108).

10. The smart switch system (20) in claim 3, wherein when the switch control unit (106) receives a standalone mode signal (116) and the input voltage detection unit (114) detects the input voltage (112), the switch control unit (106) turns on the switch unit (108).

11. A controlling method applied to a switch box (10), the switch box (10) comprising a switch box output side (102), an output-side voltage detection unit (104), a switch control unit (106), a switch unit (108) and a switch box input side (110), the controlling method comprising:
the output-side voltage detection unit (104) detecting a voltage of the switch box output side (102) and informing the switch control unit (106) of the voltage of the switch box output side (102);
according to the voltage of the switch box output side (102), the switch control unit (106) turning on or off the switch unit (108); and
when the switch control unit (106) turns on the switch unit (108), an input voltage (112) sent from a direct-current voltage generation apparatus(50) being sent to the switch box output side (102) through the switch box input side (110) and the switch unit (108).

12. The controlling method in claim 11, wherein the switch box (10) further comprises an input voltage detection unit (114),
wherein the input voltage detection unit (114) detects the input voltage (112) and informs the switch control unit (106) of the input voltage (112).

13. The controlling method in claim 12, wherein when the input voltage detection unit (114) detects the input voltage(112) but the input voltage (112) does not exist, the switch control unit (106) turns off the switch unit (108).

14. The controlling method in claim 11, wherein the controlling method is applied to an electronic apparatus (30) and a power grid (40),
wherein when the electronic apparatus (30) detects a voltage of the power grid (40), the electronic apparatus (30) generates a voltage, so that the voltage generated by the electronic apparatus (30) is detected by the output-side voltage detection unit (104).

15. The controlling method in claim 14, wherein
when the output-side voltage detection unit (104) detects the voltage generated by the electronic apparatus (30) and the input voltage detection unit (114) detects the input voltage (112), the switch control unit (106) turns on the switch unit(108); and/or
when the switch control unit (106) receives a standalone mode signal (116) and the input voltage detection unit (114) detects the input voltage (112), the switch control unit (106) turns on the switch unit (108).
